# EUROPÄISCHE PATENTSCHRIFT

(11) **EP 3 028 960 B1**
(45) Veröffentlichungstag und Bekanntmachung des Hinweises auf die Patenterteilung: **08.01.2020**
(21) Anmeldenummer: 15195162.1
(22) Anmeldetag: 18.11.2015
(51) Int. Cl.: B65G 17/20

(54) **VERFAHREN ZUM LÖSEN EINES FÖRDERELEMENTS VON EINEM FÖRDERTRÄGER EINER FÖRDERKETTE ZUM FÖRDERN VON HÄNGEWARE, FÖRDERKETTE, FÖRDERTRÄGER UND FÖRDERELEMENT**
METHOD FOR RELEASING A CONVEYOR ELEMENT FROM A CONVEYOR FRAME OF A CONVEYOR CHAIN FOR CONVEYING SUSPENDED ITEMS, CONVEYOR CHAIN, CONVEYOR FRAME AND CONVEYOR ELEMENT
PROCEDE DESTINE A DESSERRER UN ELEMENT DE TRANSPORT D'UN SUPPORT DE TRANSPORT D'UNE CHAINE A RACLETTES POUR TRANSPORTER UNE MARCHANDISE SUSPENDUE, CHAINE A RACLETTES, SUPPORT DE TRANSPORT ET ELEMENT DE TRANSPORT

(30) Priorität: 27.11.2014 DE 102014224253
(43) Veröffentlichungstag der Anmeldung: 08.06.2016
(73) Patentinhaber: Vanderlande Industries B.V., 5466 RB Veghel (NL)
(72) Erfinder: Schneuing, Ralf Ferdinand, 33649 Bielefeld (DE)
(74) Vertreter: Hoffmann Eitle

(56) Entgegenhaltungen:
- EP-A1- 1 818 290
- WO-A1-03/070608
- WO-A1-2008/067684
- WO-A1-2011/097654
- DE-A1- 3 401 014
- DE-U1- 9 317 226
- US-A- 2 411 906
- US-A- 3 927 760
- US-A- 4 210 238
- US-A- 4 883 165
- US-A- 5 799 769
- US-B1- 7 360 643

## Beschreibung

### TECHNISCHES GEBIET

Die vorliegende Erfindung betrifft eine Förderkette und eine Führung zum Fördern von Hängeware gemäß dem Gegenstand des Anspruchs 1.

### STAND DER TECHNIK

Förderanlagen zum Fördern von Hängeware sind grundsätzlich bekannt und weit verbreitet. Solche Anlagen dienen insbesondere dem Transport von Bekleidungsstücken oder Taschen, die, zumeist über Kleiderbügel oder ähnliche Aufhängungsvorrichtungen, hängend gefördert werden. Bei Förderanlagen zum Fördern von Hängeware gibt es verschiedenste Automatisierungsgrade zwischen einer rein manuellen Förderanlage, bei der ein Förderelement, an dem die Hängeware hängt oder durch das die Hängeware über eine Schiene verschoben wird, durch Muskelkraft bewegt wird, bis zu einer vollautomatischen Anlage, die neben dem Fördern der Hängeware auch eine Sortierung und Kommissionierung der Ware durchführen kann.

Insbesondere letztgenannte vollautomatische Anlagen werden zunehmend im Internethandel und Großhandel eingesetzt.

Eine aus dem Stand der Technik bekannte Förderanlage ist in DE 10 2011 118 303 A1 beschrieben. Dort wird insbesondere ein Förderträger für eine Förderkette zum Fördern von Hängeware beschrieben, wobei zum Fördern der Hängeware ein separates Förderelement an dem Förderträger angebracht ist. Die Anbringung erfolgt in DE 10 2011 118 303 A1 durch Anschrauben des Förderelements am Förderträger mittels einer im Förderträger versenkten und nur von oben zugänglichen Schraube. Für das Förderelement wird in DE 10 2011 118 303 A1 alternativ beschrieben, dass es zumindest teilweise mit dem Förderträger integral ausgeführt ist.

Während des Betriebs der Förderanlage kommt es vor, dass einzelne Förderelemente beschädigt werden und deshalb ausgetauscht werden müssen. Um dies bei herkömmlichen Förderanlagen, durchzuführen, ist es erforderlich, die Förderkette zu öffnen. Dies bedeutet, dass zumindest ein Förderträger aus der Kette entnommen und durch einen neuen oder einen reparierten Förderträger ersetzt werden muss. Dies bringt erhebliche Probleme mit sich, denn es führt häufig zu langem Stillstand der Förderanlage. Einer der Gründe hierfür liegt darin, dass die Förderkette normalerweise unter Spannung steht und ein Wiederverschließen der Kette nach ihrem Öffnen große Kraftanstrengung und/oder spezielle Vorrichtungen erfordert. Besonders problematisch wird der Austausch eines Kettengliedes dann, wenn die Förderkette nicht nur in einer horizontal verlaufenden Ebene läuft, sondern auch Niveauunterschiede überwindet. Dies ist bei Hängewarenförderanlagen üblicherweise der Fall. Dann rutscht ein möglichst großer Teil der Kette an den lokal tiefsten Punkt der die Kettenbahn definierenden Führung, was nicht selten zu Entgleisungen der Kette führt. Dann ist die Wiederherstellung der Kette besonders aufwendig.

Ein weiteres Problem mit den Förderanlagen aus dem Stand der Technik liegt darin, dass die Art der Förderelemente weitestgehend festgelegt ist und nur geändert werden kann, indem der gesamte Förderträger ausgetauscht oder wenigstens aus der Förderkette entnommen wird.

Dies führt dazu, dass die Auslegung einer Hängewarenförderanlage nicht ohne weiteres verändert werden kann, was insbesondere auch eine Festlegung auf die zu fördernden Gegenstände betrifft und mögliche Fehler in der Planung der Förderanlage nur mit großem Aufwand beseitigt werden können.

Im Fall der Ausgestaltung gemäß DE 10 2011 118 303 A1 kann das dort als Tragsegment bezeichnete Förderelement grundsätzlich vom Förderträger gelöst werden. Um dies bei geschlossener Förderkette zu erreichen, müsste jedoch die Führungsschiene so ausgebildet sein, dass die versenkte Schraube durch die Führungsschiene hindurch von oben gelöst werden kann. Die Ausgestaltung üblicher Förderträger, wie auch desjenigen aus DE 10 2011 118 303 A1, sieht vor, dass die Förderträger sehr knapp unterhalb der Führungsschiene verlaufen, um eine hohe Stabilität quer zur Förderrichtung zu haben. Aus diesem Grund ist es bei der Ausgestaltung eines Förderträgers gemäß DE 10 2011 118 303 A1 nur dann möglich, das Tragsegment vom Förderträger zu lösen, ohne die Förderkette zu öffnen, wenn die Führungsschiene an zumindest einer Stelle so ausgebildet ist, dass ein Hindurchgreifen eines Öffnungswerkzeugs für die Schraube möglich ist.

Dies führt aber zu einem Mehraufwand bei der Auslegung der Förderanlage und erlaubt es nicht, das Tragsegment an anderen Stellen als der für das Hindurchgreifen des Öffnungswerkzeugs ausgeführten Stelle der Führungsschiene vom Förderträger zu lösen.

In jedem Fall ist die Montage und Demontage des Tragsegments aus DE 10 2011 118 303 A1 am bzw. vom Förderträger kompliziert und aufwendig.

DE 20 2008 007 100 U1 und EP 2 128 050 A1 offenbaren eine Hängeförderanlage mit Förderträgern und daran angeschraubten Förderelementen, wobei die Förderträger entlang einer Führungsbahn bewegt werden. Hierbei ist es jedoch aufgrund der Ausgestaltung der Schrauben, mittels derer die Förderelemente an den Förderträgern angeschraubt sind, zeitintensiv, einzelne Förderelemente auszutauschen oder zu wechseln. Die aus diesen Dokumenten bekannte Vorrichtung ermöglicht es auch nicht, unterschiedliche Förderelemente an einem Förderträger anzubringen, weil die spezielle Schraubverbindung eine bestimmte Anbindung des Förderelements voraussetzt.

US 4 883 165 A1 offenbart eine Hängeförderanlage für einen endlos, kontinuierlich fahrenden Förderer zum Fördern von Gegenständen an Drahthaken durch ein Sprühfärbfeld. Ein oberes Element ist permanent mit dem fahrenden Förderer verbunden und ein unteres Element kann leicht entnommen und ersetzt werden, während der Förderer fährt. US 3,927,760 A1 und US 2,411,906 A1 offenbaren ferner Hängeförderanlagen gemäß dem Oberbegriff des Anspruchs 1.

### DARSTELLUNG DER ERFINDUNG

Vor dem Hintergrund der oben beschriebenen Probleme im Stand der Technik besteht eine Aufgabe der vorliegenden Erfindung darin, es zu ermöglichen, dass ein Austausch eines einzelnen Förderelements einer Förderkette einer Hängewarenförderanlage leichter als im Stand der Technik erfolgen kann, so dass eine hierdurch bedingte Standzeit der Förderanlage minimiert wird.

Die obigen Aufgaben der Erfindung werden gelöst durch die Förderkette und die Führung nach Anspruch 1. Bevorzugte weitere Merkmale der Erfindung ergeben sich aus den Unteransprüchen und der nachfolgenden Beschreibung.

Das erfindungsgemäße Verfahren zum Lösen eines Förderelements von einem Förderträger, der mit mehreren weiteren Förderträgern eine Förderkette zum Fördern von Hängeware bildet, wobei der Förderträger auf einer ersten Seite des Förderträgers mit einer Führung wirkverbunden ist und wobei das Förderelement mittels einer Steckverbindung an dem Förderträger angebracht ist, um die Hängeware zu fördern, besteht darin, dass die Steckverbindung von einer zweiten Seite des Förderträgers aus, die von der ersten Seite verschieden ist, getrennt wird, so dass das Förderelement bei geschlossener Förderkette vom Förderträger gelöst wird.

Erfindungsgemäß wird unter einem Förderträger insbesondere ein Kettenglied der Förderkette verstanden, an dem ein Förderelement angebracht werden kann. Der Förderträger ist dabei an einer Führung, insbesondere einer Führungsschiene, angebracht oder anderweitig hiermit wirkverbunden, insbesondere über einen oder mehrere Laufwagen oder über mit dem Förderträger verbundene Rollen, und entlang der Führung bewegt werden. Dabei wird die Förderkette bei automatisierten Förderanlagen durch einen Antrieb angetrieben, insbesondere durch einen ein oder mehrteiligen Reibrollenantrieb, der direkt auf die Förderkette einwirkt. Bevorzugt liegt der Förderträger in Form einer Zugstange vor, kann jedoch auch anders ausgestaltet sein. Der Förderträger ist somit ein Element, welches das eigentliche Förderelement trägt oder zumindest bewegt. Je nach Auslegung der Förderanlage kann vorgesehen sein, dass die zu fördernde Hängeware am Förderelement hängt, d.h. auch die Gewichtskraft der Hängeware auf das Förderelement wirkt, oder dass die Hängeware auf einem Gleitprofil aufliegt und durch das Förderelement über dieses Gleitprofil geschoben oder gezogen wird. Die Auslegung der Förderanlage beeinflusst insbesondere die Anforderungen an die Verbindung zwischen dem Förderelement und dem Förderträger.

Unter einer Förderkette ist im vorliegenden Zusammenhang eine Aneinanderreihung von einzelnen Kettengliedern, umfassend zumindest einen Förderträger, zu verstehen. Dabei kann die Förderkette auch weitere Elemente aufweisen, die anders gestaltet sind als die Förderträger. Insbesondere betrifft dies Gelenke und Laufwagen oder Hilfsvorrichtungen, die für die Führung, den Antrieb oder allgemein das Bewegen der Kette erforderlich oder vorteilhaft sind. Die Förderkette umfasst also die Gesamtheit der Förderträger. Sie verläuft entlang der Führung, mit welcher ihre Kettenglieder, insbesondere also der oder die Förderträger, wirkverbunden sind.

Unter Hängeware wird im vorliegenden Zusammenhang insbesondere Ware verstanden, die beispielswiese über einen Bügel hängend transportiert wird. Klassische Beispiele von Hängeware sind Kleidungsstücke, die an Kleiderbügeln hängen, oder Transporttaschen zur Aufnahme von verschiedenen Gegenständen. Hängeware steht im vorliegenden Zusammenhang im Gegensatz zu Liegeware. Bei Liegeware handelt es sich um Ware, die auf einem Untergrund ruhend transportiert wird, der sich bewegt. Demgegenüber hängt Hängeware unterhalb der Förderkette, insbesondere also eines Förderelements.

Im Zusammenhang mit der vorliegenden Erfindung ist unter einer Führung, mit welcher der Förderträger wirkverbunden ist, insbesondere eine oder mehrere Führungsschiene(n) zu verstehen, über die der Förderträger entlang eines definierten Weges geführt wird. Die Wirkverbindung zwischen dem Förderträger und der Führung kann bevorzugt über einen am Förderträger direkt oder indirekt angebrachten Laufwagen oder eine direkt oder indirekt an dem Förderträger angeordnete Rolle oder Gleitvorrichtung realisiert werden. Ein Laufwagen wird bevorzugt, weil er verhältnismäßig engen Kurvenradien der Führung folgen und ohne äußere Schmierung betrieben werden kann, was eine ansonsten bestehende Verschmutzungsgefahr der zu fördernden Ware eliminiert oder wenigstens reduziert.

Dass der Förderträger auf seiner ersten Seite mit der Führung wirkverbunden ist, bedeutet, dass die Führung relativ zum Förderträger auf der ersten Seite des Förderträgers angeordnet ist und dass die Führung auf den Förderträger einwirkt, insbesondere seine Bewegungsrichtung definiert und/oder ihn trägt. Da der Förderträger als Kettenglied der Förderkette entlang der Führung geführt wird, ist die Führung nicht an einer, wie immer im vorliegenden Text in Bezug auf die lokale Bewegungsrichtung des Förderträgers definierten, Vorderseite oder Rückseite des Förderträgers angeordnet. Senkrecht zu einer in der Bewegungsrichtung des Förderträgers und zentral im Förderträger verlaufenden Längsachse liegen die Seiten, auf denen die Führung relativ zum Förderträger mit diesem wirkverbunden und angeordnet sein kann. Erfindungsgemäß werden dabei zumindest zwei verschiedene Seiten unterschieden "oben" und "unten". Jede dieser Seiten nimmt um die Längsachse herum eine Hälfte (180 Grad) der senkrecht zur Längsachse definierbaren Ebenen ein. Bevorzugt werden zumindest vier verschiedene Seiten unterschieden: "oben", "unten", "links" und "rechts". Jede dieser Seiten nimmt um die Längsachse herum ein Viertel (90 Grad) der senkrecht zur Längsachse definierbaren Ebenen ein. Weiter bevorzugt werden zumindest acht verschiedene Seiten unterschieden: "oben", "oben-rechts", "rechts", "unten-rechts", "unten", "untenlinks", "links" und "oben-links". Jede dieser Seiten nimmt um die Längsachse herum ein Achtel (45 Grad) der senkrecht zur Längsachse definierbaren Ebenen ein.

Ein Trennen oder eine Trennbarkeit einer Verbindung, insbesondere einer Steckverbindung, von einer Seite aus bedeutet, dass die Verbindung von der Seite aus derart beeinflusst wird, dass sie sich löst oder öffnet. Dabei kommt es im Zusammenhang mit der vorliegenden Erfindung auf die Bewegungsrichtung an, in der die Verbindung zum Lösen oder Öffnen der Verbindung erreicht wird bzw. erreichbar ist. Die Seite, von der aus eine Verbindung gelöst wird bzw. lösbar ist, ist diejenige, von der aus die Verbindung in der genannten Bewegungsrichtung erreicht wird bzw. erreichbar ist.

Beispielsweise die nachfolgend aufgeführten Schrauben lassen sich zum Lösen nur von einer Seite in Verlängerung des Stiftes aus beeinflussen, auf dem das Schraubengewinde ausgebildet ist: Kopf-Schlitzschrauben, Kopf-Kreuzschlitzschrauben, Innen-Sechskantschrauben, Innen-Vierkantschrauben, Innen-Vielzahnschrauben, Innen-Sechsrundschrauben oder Kombinationen dieser Schraubenkopfantriebsarten, insbesondere normgemäße Zylinderkopfschrauben, (Linsen-)Senkkopfschrauben, Linsenkopfschrauben, Rundkopfschrauben oder Gewindestifte.

Bei der Verbindung, mittels der das Förderelement an dem Förderträger angebracht ist, kann es sich grundsätzlich um jede lösbare Steckverbindung handeln. Alternativ ist auch eine Schraubenverbindung möglich, wobei die Steckverbindung gegenüber der Schraubenverbindung bevorzugt wird, weil sie sich schneller und leichter lösen lässt und damit das Verfahren zum Lösen des Förderelements vom Förderträger beschleunigt und weniger fehleranfällig macht. Im Fall einer Schraubenverbindung wird bevorzugt, eine Schraube auszuwählen, die von einer anderen Seite als der Verlängerung ihres Stiftes, auf dem das Schraubengewinde ausgebildet ist, gelöst werden kann, beispielsweise Außen-Sechskantschrauben, Außen-Vierkantschrauben, Rändelschrauben oder Flügelschrauben.

Dass das Förderelement bei geschlossener Förderkette vom Förderträger gelöst wird, bedeutet, dass die Kettenglieder der Förderkette nicht voneinander getrennt werden müssen, um das Förderelement vom Förderträger lösen zu können. Mit anderen Worten kann die Förderkette intakt bleiben, während nur das Förderelement vom Förderträger gelöst und ausgetauscht oder repariert werden kann.

Bevorzugt wird dabei, dass der Förderträger der Förderkette während des Trennens der Verbindung mit der Führung, insbesondere einer Führungsschiene, wirkverbunden bleibt. So kann das erforderliche Maß einer Einwirkung auf die Förderträger minimiert werden.

Die erfindungsgemäße Förderkette zum Fördern von Hängeware umfasst mehrere Förderträger, die jeweils auf einer ersten Seite der Förderträger mit einer Führung wirkverbunden sind, und zumindest ein Förderelement, das mittels einer Steckverbindung an zumindest einem der Förderträger lösbar angebracht ist, um die Hängeware zu fördern. Sie ist dadurch gekennzeichnet, dass die Steckverbindung derart ausgestaltet ist, dass sie von einer zweiten Seite des Förderträgers aus, die von der ersten Seite verschieden ist, trennbar ist, so dass das Förderelement bei geschlossener Förderkette vom Förderträger lösbar ist.

Hierfür wird bevorzugt, dass durch die Wirkverbindung zwischen der Führung und dem Förderträger ein Abstand zwischen einer Oberseite des Förderträgers und einer Unterseite der Führung sichergestellt wird, in den ein Teil der Verbindung hineinragen kann und über den die Verbindung gelöst werden kann. Alternativ kann die Verbindung aber auch so ausgestaltet werden, dass sie nicht über den Förderträger nach oben hinausragt, sondern beispielsweise durch eine seitliche Öffnung im Förderträger gelöst werden kann.

Durch die erfindungsgemäße Förderkette wird ermöglicht, dass eine durch einen Austausch eines einzelnen Förderelements der Förderkette bedingte Standzeit der Förderanlage minimal ist. Denn die Förderkette muss nicht geöffnet und in der Folge wieder geschlossen werden, sondern das Förderelement kann bei geschlossener Kette ausgetauscht oder repariert werden. Der bei einem solchen Austausch oder einer solchen Reparatur bei bisherigen Anlagen für die Standzeit der Förderanlage größte Nachteil ist das Erfordernis, die Kette zu öffnen, um das Förderelement samt dem Förderträger zu entnehmen und durch ein neues oder repariertes zu ersetzen. Dieser Aufwand ist erfindungsgemäß nicht mehr nötig. Somit kann die Hängewarenförderanlage, insbesondere die Förderkette samt der hieran angeordneten Förderelemente leichter und schneller als bisher gewartet und/oder umgestaltet werden.

Der Förderträger für eine erfindungsgemäße Förderkette zum Fördern von Hängeware, wobei zum Fördern der Hängeware zumindest ein separates Förderelement an dem Förderträger lösbar anbringbar ist, ist dadurch gekennzeichnet, dass er dazu ausgestaltet ist, dass das Förderelement mittels einer Steckverbindung an dem Förderträger anbringbar ist. Der Förderträger ist dazu geeignet und ausgestaltet, in einer oben beschriebenen Förderkette als der beschriebene zumindest eine Förderträger eingesetzt zu werden, an dem das zumindest eine Förderelement mittels der Verbindung lösbar angebracht ist, um die Hängeware zu fördern, wobei die Verbindung derart ausgestaltet ist, dass sie von der zweiten Seite des Förderträgers aus trennbar ist, so dass das Förderelement bei geschlossener Förderkette vom Förderträger lösbar ist.

Das Förderelement für eine erfindungsgemäße Förderkette zum Fördern von Hängeware, wobei das Förderelement zum Fördern der Hängeware an zumindest einem separaten Förderträger lösbar anbringbar ist, ist dadurch definiert, dass es mittels einer Steckverbindung an dem Förderträger anbringbar ist. Das Förderelement ist dazu geeignet und ausgestaltet, in einer oben beschriebenen Förderkette als das beschriebene zumindest eine Förderelement eingesetzt zu werden, das an dem zumindest einen Förderträger mittels der Verbindung lösbar angebracht ist, um die Hängeware zu fördern, wobei die Verbindung derart ausgestaltet ist, dass sie von der zweiten Seite des Förderträgers aus trennbar ist, so dass das Förderelement bei geschlossener Förderkette vom Förderträger lösbar ist.

Unter einer Steckverbindung wird im vorliegenden Zusammenhang eine Verbindung verstanden, die durch Hineinstecken eines nachfolgend als männlich bezeichneten ersten Verbindungselements entlang einer Einführrichtung in ein nachfolgend als weiblich bezeichnetes zweites Verbindungselement hergestellt wird. Insbesondere ist dabei keine mehrere vollständige Umdrehungen umfassende Schraubbewegung erforderlich. Es kann aber ein Bajonettverschluss oder dergleichen vorgesehen sein, um das männliche Verbindungselement in dem weiblichen Verbindungselement zu sichern.

Quer zur Einführrichtung ist das männliche Verbindungselement mit dem weiblichen Verbindungselement durch Formschluss verbunden. Längs der Einführrichtung kann das männliche Verbindungselement mit dem weiblichen Verbindungselement durch Kraftschluss und/oder durch Formschluss verbunden sein. Insbesondere kann also das männliche Verbindungselement in das weibliche Verbindungselement eingerastet werden. Eine formschlüssige Verbindung längs der Einführrichtung ist jedoch nicht in jeder Ausführungsform erforderlich und somit optional, wenn auch zu bevorzugen. Eine Steckverbindung im Sinne der vorliegenden Erfindung stellt eine mechanische Verbindung zwischen dem Förderelement und dem Förderträger her, sodass das Förderelement an dem Förderträger angebracht ist und damit durch den Förderträger getragen, geschoben und/oder gezogen werden kann.

Durch die erfindungsgemäße Ausgestaltung des Förderträgers und/oder des Förderelements ist es besonders leicht möglich, das Förderelement von dem Förderträger zu lösen und wieder hiermit zu verbinden. Sofern ein Förderelement beschädigt ist oder aus anderen Gründen ausgetauscht oder beispielsweise zu Wartungszwecken vom Förderträger gelöst werden soll, kann die Steckverbindung einfach gelöst werden, wodurch sich das Förderelement vom Förderträger abnehmen lässt.

Insbesondere ist es nicht erforderlich, die Förderkette zu öffnen und den Förderträger aus der Förderkette zu entnehmen, um das Förderelement vom Förderträger zu lösen. Darüber hinaus erleichtert es die Steckverbindung, insbesondere im Gegensatz zu einer Schraubenverbindung, gleichzeitig mehrere parallele Verbindungsabschnitte zu schließen. Somit ist es nicht nur möglich, beschädigte oder aus anderen Gründen auszuwechselnde Förderelemente schnell und einfach auszutauschen, sondern die Erfindung ermöglicht insbesondere auch eine modulare Konfiguration der Förderkette, weil Förderelemente unterschiedlichster Formen und Größen mittels der Steckverbindung am Förderträger angebracht werden können, insbesondere während die Förderkette schon oder noch geschlossen ist.

Somit führt die vorliegende Erfindung zu einer erheblichen Erleichterung bei Austausch oder Umgestaltung der Förderelemente und damit der Förderanlage insgesamt und erleichtert folglich die Wartung und erhöht die Flexibilität der Förderanlage insgesamt.

Ein erfindungsgemäßer Förderträger ist dazu ausgestaltet, dass zumindest zwei unterschiedliche Förderelemente mittels der Steckverbindung alternativ und/oder gleichzeitig lösbar an dem Förderträger anbringbar sind. Hierfür weist der Förderträger bevorzugt zumindest zwei unabhängig voneinander wirkende Steckverbindungsabschnitte auf, die einzeln und/oder zusammen zum alternativen und/oder gleichzeitigen Anbringen der zumindest zwei unterschiedlichen Förderelemente nutzbar sind.

Unter einem Steckverbindungsabschnitt kann beispielsweise eine Öffnung zur Aufnahme eines männlichen Teils der Steckverbindung oder ein Stift oder Bolzen zum Einführen in einen weiblichen Teil der Steckverbindung verstanden werden. Bei geeigneter Wahl von Abstand, Form und Dimensionierung der Steckverbindungsabschnitte kann beispielsweise ein einziges Förderelement durch mehrere Steckverbindungsabschnitte besonders sicher und/oder besonders fest am Förderträger angebracht werden. Beispielsweise können auch zwei Förderelemente jeweils mit einem Steckverbindungsabschnitt gleichzeitig mit einem einzigen Förderträger verbunden sein.

Die Steckverbindungsabschnitte des Förderträgers sind so angeordnet, geformt und dimensioniert, dass sie durch entsprechende passende Förderelemente einerseits als redundante oder ergänzende Mehrfachverbindung eines Förderelements mit einem Förderträger und/oder andererseits als mehrere Einzelverbindungen mehrerer Förderelement mit dem Förderträger verwendet werden können. Dies ermöglicht eine besonders flexible Nutzung des Förderträgers und ist auch besonders vorteilhaft für eine modulare Nutzung der Förderträger und Förderelemente in der Förderanlage.

In einer bevorzugten Ausführungsform ist der Förderträger eine Zugstange für eine Zugstangenkette. Zugstangen haben u.a. den Vorteil, dass sie besonders gut zur Aufnahme von Förderelementen geeignet sind, die ähnlich lang wie die Zugstange sind und/oder für die eine starre Basis, an der sie befestigt sind, vorteilhaft ist. Außerdem sind Zugstangen besonders vorteilhaft im Hinblick auf die Übertragung sowohl von Zugkräften als auch von Schubkräften, was es erleichtert, die Förderkette anzutreiben und somit auch die Auslegung des Antriebs vereinfacht. Insbesondere können Zugstangen durch einen Reibrollenantrieb angetrieben werden. Grundsätzlich können die Förderträger jedoch auch eine andere Form als die einer Zugstange einnehmen, solange sie für eine Förderkette zum Fördern von Hängeware einsetzbar sind.

Bevorzugt ist das Förderelement dazu ausgestaltet, die Hängeware über einen ortsfesten Untergrund, insbesondere ein schienenförmiges Gleitprofil, zu fördern. Bei dem Förderelement kann es sich insbesondere um eines der folgenden Elemente handeln: Klinkenelement, Leiterelement, Kamm-Mitnehmer und Stiftelement, die alle grundsätzlich aus dem Stand der Technik zur Förderung von Hängeware bekannt sind. Die Erfindung ist aber auch auf ähnliche Förderelemente anwendbar.

Während das Leiterelement die Hängeware trägt, sind die anderen zuvor genannten bevorzugten Förderelemente dafür ausgelegt, die Hängeware über einen ortsfesten Untergrund, der zumeist Gleitprofil genannt wird, zu verschieben.

Beispielsweise im Fall der zuletzt genannten Förderelemente Klinkenelement, Kamm-Mitnehmer oder Stiftelement, ruht die Gewichtskraft der Hängeware im Wesentlichen auf dem Gleitprofil, während die eigentliche Förderkraft, d.h. die Kraft, welche die Hängeware vorwärts bewegen soll, durch das Förderelement auf die Hängeware angelegt wird. Die vorliegende Erfindung lässt sich jedoch auch ohne ein Gleitprofil oder einen andersartigen ortsfesten Untergrund, über den die Hängeware gefördert wird, realisieren. Hierfür kann beispielsweise das Leiterelement oder eine ähnliche Vorrichtung wie ein Haken oder eine Öse verwendet werden, an oder in der/dem die Hängeware getragen werden kann.

Bevorzugt weist das Klinkenelement dabei einen festen Teil und einen schwenkbaren Teil auf, der gegenüber dem festen Teil um ein Lager schwenkbar ist, wobei der schwenkbare Teil und/oder der feste Teil zusätzlich zu dem Lager eine Stütze aufweist, mit der eine relative Position des schwenkbaren Teils gegenüber dem festen Teil in zumindest einer Richtung arretierbar ist. Dies bedeutet, dass der schwenkbare Teil beispielsweise in einer heraufgeschwenkten Position quer zu einer Verlaufsrichtung des Gleitprofils arretierbar ist. So kann vermieden werden, dass der schwenkbare Teil beim Herunterschwenken das Gleitprofil verfehlt.

Als die Stütze ist bevorzugt an dem festen Teil oder dem schwenkbaren Teil ein Vorsprung und an dem schwenkbaren Teil oder dem festen Teil eine Aufnahme für den Vorsprung, die insbesondere durch zwei beabstandete Rippen definiert ist, ausgebildet. Wenn der feste Teil den Vorsprung aufweist, weist also der schwenkbare Teil die Aufnahme auf, wenn der feste Teil die Aufnahme aufweist, weist der schwenkbare Teil den Vorsprung auf. Es kann jedoch auch andere Realisierungen einer solchen Stütze geben, beispielsweise eine kraftschlüssige Halterung durch einen Elektromagneten oder ähnliches. Alternativ zu den Rippen kann auch beispielsweise eine konturierte Fläche oder eine einzelne Rippe eingesetzt werden. Die bevorzugte Stütze ist jedoch besonders einfach realisierbar und zugleich sicher.

Mit Vorteil ist die Steckverbindung mit zumindest einem längs einer Einführrichtung der Steckverbindung wirkenden Formschlusselement ausgestaltet. Bevorzugt umfasst das Formschlusselement dabei eine erste Rastnase, die elastisch in Eingriff mit einem entsprechenden Anschlag und/oder einer entsprechenden zweiten Rastnase bringbar ist. Ein Beispiel für eine Steckverbindung mit längs der Einführrichtung wirkendem Formschlusselement ist eine snap-in Verbindung, bei der das männliche Element zwei im Wesentlichen parallele Stifte aufweist, die in einer senkrecht zu ihrer Haupterstreckungsrichtung verlaufenden Biegerichtung elastisch biegbar sind und in der Biegerichtung eine Rastnase aufweisen. Ein entsprechender Anschlag kann die Umrandung einer Öffnung sein, durch welche die Stifte eingeführt werden. Bei geeigneter Dimensionierung der Öffnung werden die Stifte beim Einführen in die Öffnung durch die Rastnasen beispielsweise nach innen gebogen und entspannen sich nach außen, sobald die Rastnasen die Umrandung der Öffnung passiert haben. Bei geeigneter Form (z.B. Sägezahnform) der Rastnasen können die Stifte dann nicht mehr ohne weiteres entgegen der Einführrichtung aus der Öffnung herausgezogen werden, weil die Rastnasen mit der Umrandung der Öffnung eine formschlüssige Verbindung eingehen. Durch manuelles Zusammendrücken der Stifte können die Rastnasen wieder außer Eingriff mit der Umrandung der Öffnung gebracht und die Stifte entgegen der Einführrichtung aus der Öffnung herausgezogen werden.

Es ist jedoch auch möglich, dass die Steckverbindung ohne Formschlusselement ausgestaltet ist. Beispielsweise können die beiden Stifte so kräftig vorgespannt sein, wenn sie in die Öffnung eingeführt sind, dass ein Kraftschluss mit der Öffnung hergestellt wird und die Stifte nur unter großer Krafteinwirkung entgegen der Einführrichtung oder durch Krafteinwirkung entgegen der Vorspannung aus der Öffnung gelöst werden können.

Durch das längs der Einführrichtung der Steckverbindung wirkende Formschlusselement kann die Anbringung des Förderelements am Förderträger noch sicherer gemacht werden. Somit kann die Steckverbindung zuverlässig gegen ein unbeabsichtigtes Lösen geschützt werden, was insbesondere bei Förderelementen vorteilhaft ist, welche die Hängeware nicht nur über ein Gleitprofil bewegen, sondern sie auch tragen, also auch die Gewichtskraft der Hängeware aufnehmen.

Bei der Steckverbindung wird bevorzugt, dass der Förderträger derart ausgestaltet ist, dass er den weiblichen Teil der Steckverbindung aufweist, und/oder das Förderelement derart ausgestaltet ist, dass es den männlichen Teil der Steckverbindung aufweist. Diese Aufteilung der Teile der Steckverbindung auf den Förderträger und das Förderelement bietet insbesondere den Vorteil, dass am Förderträger keine potentiell störenden Vorsprünge vorhanden sind, wenn das Förderelement nicht am Förderträger angebracht ist. Somit kann der Förderträger bei nicht angebrachtem Förderelement besonders flach ausgeführt werden, was im Hinblick auf Bauraum und Freiraum vorteilhaft ist.

In einer bevorzugten Ausführungsform ist die Steckverbindung kodiert. Dies kann beispielsweise durch einen oder mehrere Vorsprünge oder Zapfen, Ausnehmungen oder Nuten und dergleichen sowie eine beispielsweise unregelmäßige Formgestaltung bewirkt werden, sodass die Steckverbindung nur in einer oder wenigen definierten relativen Ausrichtungen zwischen Förderelement und Förderträger hergestellt werden kann. Die Vorteile einer Kodierung der Steckverbindung liegen insbesondere in der Reduzierung der Fehleranfälligkeit bei der Montage des Förderelements am Förderträger und einer erhöhten Präzision, mit der das Förderelement am Förderträger angebracht werden kann.

In einer besonders bevorzugten Ausführungsform umfasst die Steckverbindung eine Mehrzahl männlicher Teile und eine Mehrzahl weiblicher Teile, die jeweils mit ihrem entsprechenden Gegenstück, insbesondere als je ein Steckverbindungsabschnitt, zusammenwirken. Dies bedeutet, dass zum Beispiel mehrere Stifte am Förderelement mit mehreren Öffnungen am Förderträger zusammenwirken, um eine zuverlässige Steckverbindung herzustellen. Eine solche Steckverbindung mit mehreren männlichen und weiblichen Teilen ermöglicht eine besonders sichere Anbringung des Förderelements am Förderträger, ohne dabei die Vorteile der einfachen und schnellen Anbringung des Förderelements am Förderträger durch die Steckverbindung aufzugeben. Bei geschickter Ausgestaltung der Steckverbindungsabschnitte mit den männlichen und weiblichen Teilen kann neben der erhöhten Anbringungssicherheit trotzdem eine hohe Flexibilität bei der Auswahl der an einem Förderträger anbringbaren Elemente sichergestellt werden, indem Abstände und Formen der einzelnen Steckverbindungsabschnitte aufeinander abgestimmt sind.

Es ist auch möglich, durch die Verwendung einer Steckverbindung mit einer Mehrzahl männlicher und weiblicher Teile bestimmte Konstellationen von Verbindungen zwischen Förderträger und Förderelement auszuschließen. Dies kann beispielsweise dann vorteilhaft sein, wenn ein Förderträger nur eine bestimmte Auswahl von Förderelementen aufnehmen können soll. Auf diese Weise wird ein modulares Kombinieren der Förderträger und Förderelemente ermöglicht, während die Möglichkeit geschaffen wird, nur bestimmte Kombinationen von Förderträgern und Förderelementen zu erlauben und andere auszuschließen. Dies erleichtert die Planung und die Montage einer Förderkette auch bei komplexen Konfigurationen.

Eine erfindungsgemäße Förderkette zum Fördern von Hängeware umfasst zumindest einen der oben genannten Förderträger und zumindest eines der oben genannten Förderelemente, wobei das zumindest eine Förderelement mittels der Steckverbindung an dem zumindest einen Förderträger lösbar angebracht ist. Erfindungsgemäß umfasst die Förderkette dabei eine Vielzahl der erfindungsgemäßen Förderträger und Förderelemente. In manchen Anwendungen kann es jedoch auch schon genügen, nur ein einziges erfindungsgemäßes Förderelement an einem einzigen erfindungsgemäßen Förderträger in der Förderkette vorzusehen.

Die bevorzugte Förderkette ist besonders einfach zu warten und ermöglicht eine besonders hohe Flexibilität bei der Auslegung und Planung der Förderkette im Hinblick auf mögliche zukünftige Umgestaltungen der Förderanlage.

In einer bevorzugten Ausführungsform der Förderkette ist das zumindest eine Förderelement in einem zusammengesetzten Zustand der Förderkette von dem zumindest einen Förderträger lösbar, ohne die Förderkette zu öffnen oder einer Führung, insbesondere einer Führungsschiene, ganz oder bereichsweise zu entnehmen. Diese besonders bevorzugte Eigenschaft der Förderkette ermöglicht eine besonders zuverlässige und einfache Wartung der Förderkette und verringert insbesondere die Standzeit der Förderkette bei ihrer Wartung.

Weitere vorteilhafte Merkmale und Vorteile der Erfindung ergeben sich aus der nachfolgenden Figurenbeschreibung und der Gesamtheit der Patentansprüche.

### KURZE FIGURENBESCHREIBUNG

Figuren 1a und 1b zeigen jeweils einen Ausschnitt einer bevorzugten Förderkette aus bevorzugten Förderträgern mit bevorzugten Förderelementen.
Figur 2 zeigt eine seitliche Schnittansicht einer Förderkette mit Förderträgern und daran angebrachten Förderelementen.
Figuren 3a und 3b zeigen eine Zugstange als Beispiel eines Förderträgers, wobei Fig. 3a eine perspektivische Ansicht und Fig. 3b eine seitliche Schnittansicht darstellt.
Figuren 4a und 4b zeigen eine weitere Zugstange als Beispiel eines Förderträgers, wobei Fig. 4a eine perspektivische Ansicht und Fig. 4b eine seitliche Schnittansicht darstellt.
Figur 5 zeigt ein Kreuzungsgelenk zum Verbinden zweier Zugstangen.
Figuren 6a, 6b und 7 bis 11 zeigen bevorzugte Ausführungsformen eines Förderelements oder Teile davon.
Fig. 12 zeigt eine Schnittansicht einer bevorzugten Förderanlage mit einer bevorzugten Förderkette quer zu einer Haupterstreckungsrichtung der Förderkette aufgenommen.
Fig. 13 ist eine Detailansicht einer bevorzugten Ausführungsform eines Teils aus Fig. 11.

### WEGE ZUR AUSFÜHRUNG DER ERFINDUNG

In den Figuren und der nachfolgenden Figurenbeschreibung werden gleiche Elemente durch gleiche Bezugszeichen gekennzeichnet und eine wiederholende Beschreibung wird weitgehend ausgelassen.

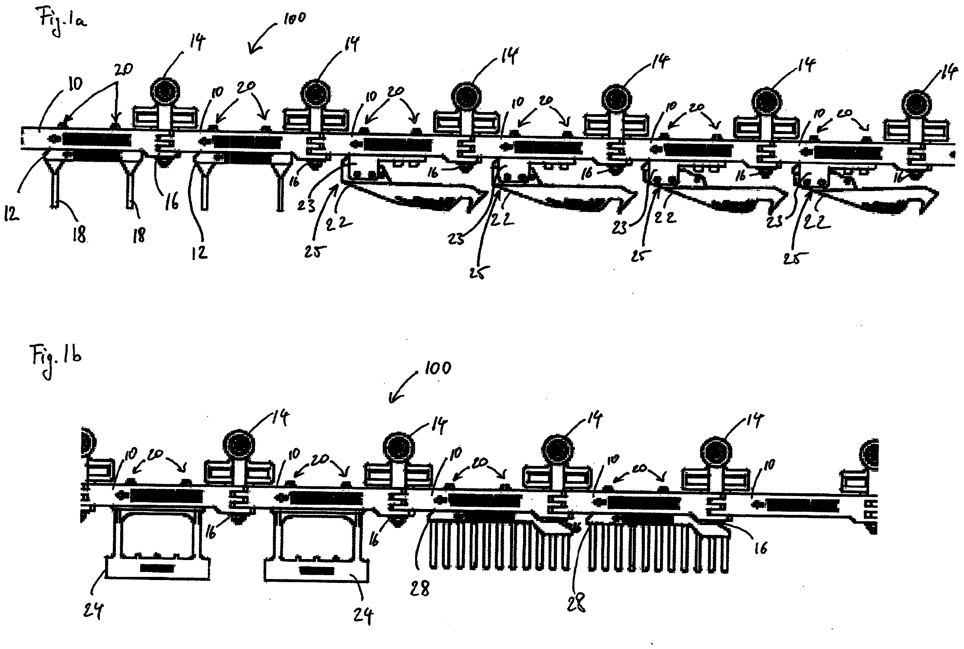

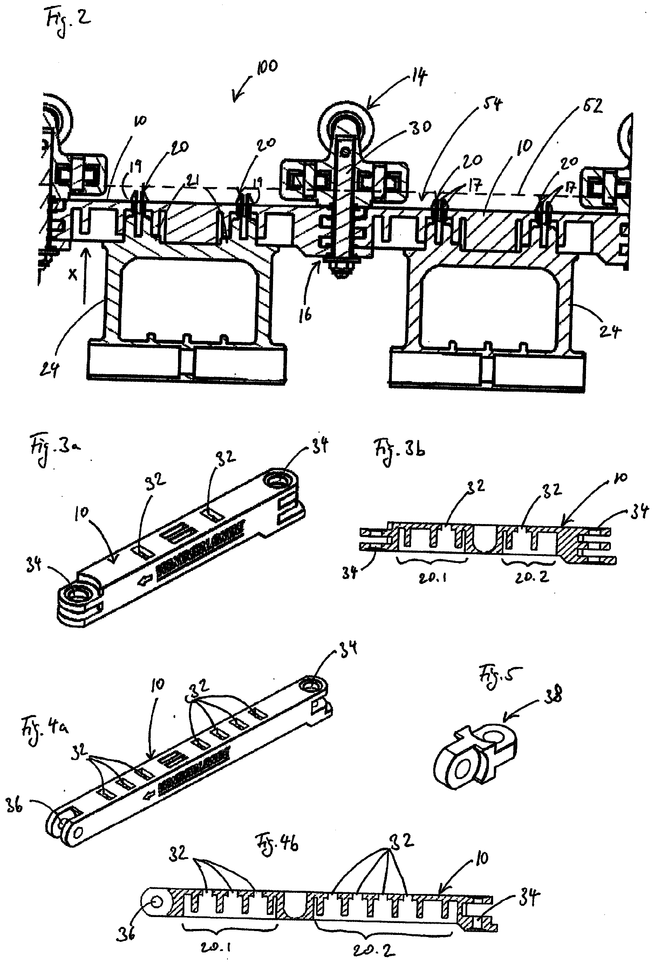

Fig. 1a zeigt einen ersten Ausschnitt aus einer Förderkette 100, die eine Vielzahl von Förderträgern 10 und verschiedene Förderelemente 12, 25 aufweist. Die Förderelemente 12, 25 sind jeweils mittels einer Steckverbindung 20 lösbar an den entsprechenden Förderträgern 10 angebracht. Die Steckverbindung 20 wird mit Bezug auf Fig. 2 weiter unten genauer erläutert. Die Förderkette 100 ist unabhängig von der speziellen Art der Förderelemente 12, 25, die an den Förderträgen 10 angebracht sind, grundsätzlich so aufgebaut, dass mehrere Förderträger 10 über Gelenke 16 miteinander verbunden sind. Die Förderträger 10 bilden somit die Kettenglieder der Förderkette 100.

Im Bereich eines Gelenks 16 zwischen benachbarten Förderträgern 10 ist in der in Fig. 1a gezeigten Ausführungsform jeweils ein Laufwagen 14 angeordnet, der dazu ausgestaltet ist, die Förderkette 100 entlang einer oberhalb der Förderträger 10 positionierten Führung (nicht gezeigt) beweglich zu lagern. Ein vertikaler Bolzen 30, der in Fig. 2 gezeigt ist und nachfolgend näher erläutert wird, stellt dabei einen Teil des Gelenks 16, also der Verbindung zwischen den benachbarten Förderträgern 10 dar, die sich im Bereich des Laufwagens 14 kontaktieren.

Jeder der Förderträger 10 in der in Fig. 1a gezeigten Ausführungsform ist durch eine Zugstange gebildet, die an ihren Längsenden so ausgestaltet ist, dass sie mit einer gleichartigen benachbarten Zugstange unmittelbar verbunden werden kann, insbesondere durch den vertikalen Bolzen 30. Alternativ hierzu sind auch andere Ausführungsformen von Förderträgern 10 denkbar, von denen eine nachfolgend noch beschrieben wird.

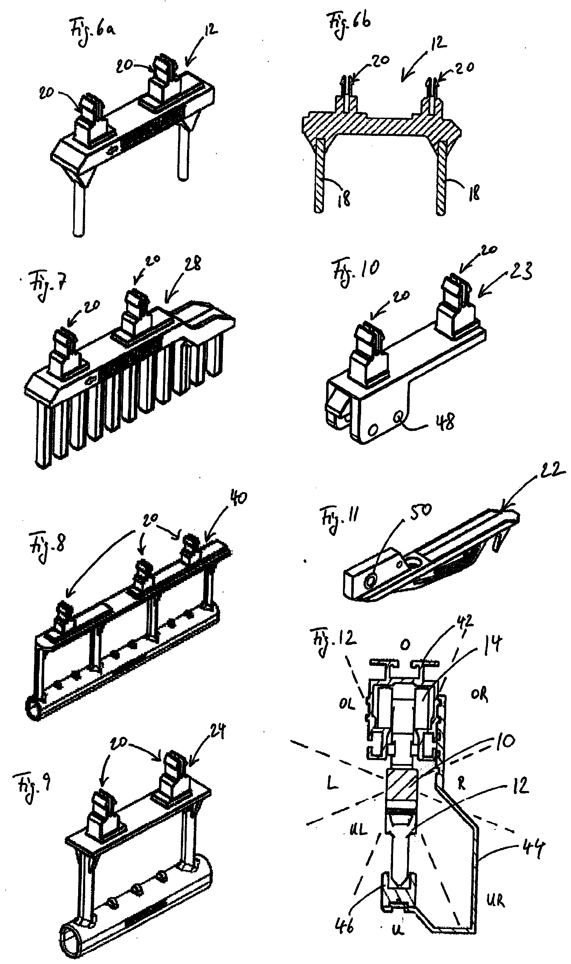

In Fig. 1a sind zwei verschiedene Förderelemente 12, 25 illustriert. Beide Förderelemente 12, 25 sind dazu ausgestaltet, Hängeware, welche durch die Förderkette 100 in einer Förderanlage gefördert werden soll, über ein Gleitprofil (nicht gezeigt) zu bewegen. Ein Beispiel für ein solches Gleitprofil ist in Fig. 12 illustriert und wird nachfolgend erläutert.

Das Förderelement 12 aus Fig. 1a wird auch als Pinclip bezeichnet und weist zwei im Wesentlichen vertikale Stifte 18 auf, die sich von einem Bereich unterhalb des jeweiligen Förderträgers 10 bis zu dem in Fig. 1a nicht gezeigten Gleitprofil erstrecken. Hängeware, die beispielsweise an einem Bügel auf dem Gleitprofil liegt, kann durch die Stifte 18 entlang des Profils bewegt werden.

Das zweite in Fig. 1a gezeigte Förderelement 25 ist ein Beispiel einer Klinke. Die Klinke 25 weist ein festes Element 23 und ein schwenkbares Element 22 auf. Das feste Element 23 ist über die Steckverbindung 20 direkt mit dem Förderträger 10 verbunden und gegenüber dem Förderträger 10 unbeweglich. Das feste Element 23 umfasst einen Lagerbolzen (nicht gezeigt), um den sich das schwenkbare Element 22 der Klinke 25 drehen kann. Auf diese Weise ist es möglich, dass das schwenkbare Element 22 je nach Stellung wahlweise in Eingriff mit der auf dem Gleitprofil befindlichen Hängeware kommen oder den Eingriff mit der Hängeware lösen kann.

Ein nach unten Schwenken des schwenkbaren Elements 22 führt zum Ergreifen eines Bügels oder einer ähnlichen Vorrichtung, worüber die Hängeware auf dem Gleitprofil aufliegt, durch einen Haken an dem schwenkbaren Element 22 der Klinke 25. Durch die Bewegung der Klinke 25 entlang der Bewegungsrichtung der Förderkette 100 wird die Hängeware in diesem Zustand über das Gleitprofil bewegt.

Beispielsweise eine Schrägung des schwenkbaren Elements 22, die in einem in Bewegungsrichtung vorderen Bereich der Klinke 25 vorgesehen ist, ermöglicht, dass das schwenkbare Element 22 durch einen auf dem Gleitprofil befindlichen Vorsprung oder insbesondere auch einen Bügel einer auf dem Gleitprofil hängenden Hängeware nach oben gedrückt wird. Dadurch wird der Haken außer Eingriff mit der bisher darin befindlichen Hängeware gebracht und diese daher von der Klinke gelöst. So kann beispielsweise sichergestellt werden, dass mit jeder Klinke 25 und damit in vordefinierten Abständen zueinander jeweils ein Hängewarenelement transportiert wird.

Fig. 1b zeigt einen zweiten Ausschnitt einer Förderkette 100 entsprechend dem Ausschnitt aus Fig. 1a. Hier werden weitere bevorzugte Ausführungsformen von Förderelementen 24, 28 an den Förderträgern 10 illustriert. Auch diese Förderelemente 24, 28 sind über die Steckverbindung 20 lösbar jeweils an einem Förderträger 10 angebracht.

Das Förderelement 24 ist im Gegensatz zu den in Fig. 1a gezeigten Förderelementen 12, 25 nicht dafür vorgesehen, Hängeware über ein Gleitprofil zu bewegen, sondern dient dazu, die Hängeware zu tragen, d.h. auch die Gewichtskraft der Hängeware aufzunehmen. Das Förderelement 24 wird auch als Leiterelement bezeichnet. Das Leiterelement 24 ist in Fig. 1b einfach ausgeführt. Dies bedeutet, dass es nur ein durch zwei vertikale Streben und einen horizontalen Boden sowie eine horizontale obere Verbindung eingegrenztes Segment umfasst. Andere Ausführungsformen von Leiterelementen weisen auch zwei, drei oder mehr solcher Segmente auf.

Daneben ist in Fig. 1b als weitere bevorzugte Ausführungsform eines Förderelements 28 ein Kamm-Mitnehmer 28 gezeigt. Der Kamm-Mitnehmer 28 ähnelt dem Pinclip 12 aus Fig. 1a, weist jedoch eine größere Zahl an vertikalen Stiften auf. Der Kamm-Mitnehmer 28 ist wie auch der Pinclip 12 und die Klinke 25 dafür ausgelegt, Hängeware über ein (in Fig. 1b nicht gezeigtes) Gleitprofil zu bewegen.

Fig. 2 zeigt eine seitliche Schnittansicht einer Förderkette 100 wie sie beispielsweise in Fig. 1b gezeigt ist. In der in Fig. 2 gezeigten Ausführungsform umfasst die Steckverbindung 20 auf Seiten des Förderträgers 10 jeweils zwei Öffnungen, die als weiblicher Teil der Steckverbindung 20 fungieren. In anderen Ausführungsformen des Förderträgers 10 kann dieser auch mehr oder weniger Öffnungen aufweisen, die untereinander auch nach einem bestimmten Muster beabstandet und/oder bemessen sein können, um die Anbringung bestimmter Förderelemente vorzugeben oder auszuschließen.

Die benachbarten Förderträger 10 sind im Bereich des Laufwagens 14 durch ein Gelenk 16 miteinander verbunden. Das Gelenk 16 zwischen den benachbarten Förderträgern 10 wird insbesondere durch ein Zusammenwirken der speziell geformten Endabschnitte der Förderträger 10 miteinander und mit einem vertikal durch die Endabschnitte geführten Bolzen 30 gebildet. Der vertikale Bolzen 30 erstreckt sich dabei durch koaxial und fluchtend übereinander angeordnete Öffnungen in ineinander eingreifenden Zungen der beiden beteiligten Förderträger 10, sodass die beiden Förderträger 10 um den Bolzen 30 schwenkbar aber nicht relativ zueinander verschiebbar sind. So kann das Gelenk 16 für eine Förderkette 100 ausgebildet werden, die nur in einer Ebene verläuft. In der einen Ebene bietet das Gelenk 16 alle notwendigen Freiheitsgrade, nämliche die Möglichkeit für die Förderkette 100 Linkskurven und Rechtskurven zu bilden. Um zudem auch Steigungen zu ermöglichen, das heißt Verläufe der Förderkette 100 im dreidimensionalen Raum auch außerhalb einer festgelegten Ebene, ist ein leicht abgewandeltes Gelenk erforderlich, das mit Bezug auf Figuren 4a, 4b und 5 erläutert werden wird.

Die Leiterelemente 24 in Fig. 2 weisen jeweils zwei männliche Steckverbindungsteile auf. Jeder dieser männlichen Steckverbindungsteile umfasst zwei parallel zueinander verlaufende Stifte 17 mit Rastnasen 19 auf einander gegenüberliegenden Außenseiten der Steckverbindungsteile. Die Rastnasen 19 werden beim Einführen der Stifte 17 der Steckverbindungsteile in die Öffnung des Förderträgers 10 elastisch nach innen gedrückt. Sobald die Rastnasen 19 vollständig durch die Öffnung gelangt sind, drängen die Stifte 17 nach außen und erzeugen somit einen Formschluss zwischen den Rastnasen 19 und dem Förderträger 10 in Einführrichtung X des männlichen Verbindungselements. Somit wird ein unbeabsichtigtes Lösen der Steckverbindung, das heißt ein Herausfallen des Leiterelements 24 nach unten, verhindert.

In Fig. 2 ist eine Unterseite 52 einer Führungsschiene, wie sie in Fig. 12 mit dem Bezugszeichen 42 versehen ist, gestrichelt eingezeichnet. Auf diese Weise wird ein kleiner Zwischenraum 54 zwischen einer Oberseite des Förderträgers 10 und der Unterseite 52 der Führungsschiene erkennbar. Die Stifte 17 mit den Rastnasen 19 ragen in den Zwischenraum 54 höchstens so weit hinein, dass sie knapp unterhalb der Unterseite 52 der Führungsschiene enden. So kann von der Seite, also beispielsweise senkrecht zur Bildebene der Fig. 2, beispielsweise mit Hilfe einer Spitzzange auf die Stifte 17 eingewirkt werden. Die Stifte 17 können so weit aufeinander zu gebogen werden, dass die Rastnasen 19 die Verbindung 20 freigeben und das betreffende Förderelement 24 nach unten entnommen und ausgetauscht werden kann.

Alternativ zur Steckverbindung 20 kann beispielsweise auch eine sehr flache Außensechskantschraube verwendet werden. Ferner kann eine alternative Steckverbindung vorgesehen sein, die bevorzugt Rastnasen umfasst, die mit einem entsprechenden Anschlag im Innern des Förderträgers zusammenwirken, um die Steckverbindung zu arretieren. Diese Steckverbindung kann gelöst werden, indem im Bereich des Anschlags eine seitliche Öffnung des Förderträgers vorgesehen ist, über welche die Rastnasen außer Eingriff mit dem Anschlag gebracht werden können. In diesem Fall ist es nicht erforderlich, einen mehr als minimalen Abstand 54 zwischen der Oberseite des Förderträgers und der Unterseite 52 der Führung vorzusehen.

Manuell kann der Formschluss zwischen den Rastnasen 19 und dem Förderträger 10 aufgehoben werden, indem die Stifte 17 der Steckverbindungsteile aufeinander zu gedrückt werden, sodass das Leiterelement 24 ohne weiteres nach unten herausgezogen werden kann. Die in Fig. 2 gezeigte Ausführungsform der Verbindung, die hier als Steckverbindung 20 ausgeführt ist, ist derart ausgestaltet, dass die Rastnasen 19 von einer anderen Seite aus zusammengedrückt und somit die Verbindung getrennt werden können, als derjenigen Seite, auf welcher der Förderträger 10 mit der (nicht gezeigten) Führung durch die Laufwagen 14 wirkverbunden ist. In der dargestellten Ausführungsform ist der Förderträger oben mit der Führung wirkverbunden, während die Verbindung von links oder rechts (bezogen auf die Bewegungsrichtung des Förderträgers 10) getrennt werden kann.

Auf diese Weise kann das Leiterelement 24 wie jedes der anderen Förderelemente sehr leicht vom Förderträger 10 gelöst werden, sodass ein Austauschen des Leiterelements 24 möglich ist, ohne das Gelenk 16 zu öffnen, die Förderträger 10 voneinander zu lösen und/oder die Förderkette 100 zu öffnen.

Der zuvor beschriebene Mechanismus funktioniert in allen dargestellten Ausführungsformen von Förderelementen und mit allen dargestellten Ausführungsformen von Förderträgern. Durch die bevorzugte Ausgestaltung der Förderkette 100 mit Laufwagen 14, über welche die Förderträger 10 mit einer Führung an einer Oberseite der Förderträger 10 wirkverbunden sind, kann ein Trennen der (Steck-) Verbindung 20 zwischen den Förderelementen und den Förderträgern 10 stets von der linken oder rechten Seite, auch von links oben, links, links unten, rechts unten, rechts und rechts oben, erfolgen. Damit ist die Führung für das Lösen des Förderelements vom Förderträger 10 nicht im Weg, so dass dieses Lösen von der Führung unbehindert erfolgen kann.

Des Weiteren weist die Steckverbindung 20 in Fig. 2 eine Kodierung auf, indem Vorsprünge 21 an dem Leiterelement 24 ausgebildet sind, für die eine passende Ausnehmung im Förderträger 10 vorgesehen ist. Auf diese Weise kann sowohl eine sehr genaue relative Ausrichtung zwischen dem Leiterelement 24 und dem Förderträger 10 erzielt werden als auch eine ungewünschte Orientierung des Förderelements am Förderträger und/oder eine ungewünschte Konstellation von Förderelement und Förderträger ausgeschlossen werden.

Fig. 3a zeigt eine perspektivische Ansicht einer Zugstange als eine Ausführungsform des Förderträgers 10. Die in Fig. 3a gezeigte Ausführungsform des Förderträgers 10 ist diejenige, die auch in den Figuren 1a, 1b und 2 illustriert ist. Auch Fig. 3b zeigt diese Ausführungsform des Förderträgers 10. Figuren 3a und 3b zeigen Öffnungen 32, die als der weibliche Teil der Steckverbindung 20 fungieren können. Die Öffnungen 32 dienen dazu, die männlichen Teile, insbesondere die Stifte 17 mit den Rastnasen 19 der Steckverbindung 20 der Förderelemente aufzunehmen. Jede der beiden Öffnungen 32 in Figuren 3a und 3b stellt dabei einen Teil eines Steckverbindungsabschnitts 20.1, 20.2 dar und die Gesamtheit der beiden Öffnungen 32 bildet den förderträgerseitigen Teil der Steckverbindung 20.

Außerdem ist in Figuren 3a und 3b jeweils an den stirnseitigen Enden der Förderträger 10 in deren Haupterstreckungsrichtung eine durchgehende vertikal verlaufende Öffnung 34 zu erkennen, die zur Aufnahme des Bolzens 30 für die Herstellung des Gelenks 16 ausgebildet ist. An einem ersten Ende des Förderträgers 10 verläuft die Öffnung 34 vertikal fluchtend durch zwei Zungen, während am gegenüberliegenden zweiten Ende des Förderträgers 10 drei korrespondierende Zungen eine vertikal fluchtende Öffnung 34 aufweisen. Die Zungen an den beiden Enden des Förderträgers 10 sind so ausgestaltet, dass sie die Bildung eines Gelenks beim Verbinden zweier gleichartiger Förderträger 10 erlauben.

Figuren 4a und 4b zeigen eine weitere bevorzugte Ausführungsform eines Förderträgers 10 in Form einer weiteren Zugstange. Der Förderträger 10 weist gegenüber dem Förderträger 10 aus Figuren 3a und 3b eine größere Zahl von Öffnungen 32 auf, die als weiblicher Teil der Steckverbindung 20 dienen können, und entsprechend größere weibliche Teile der Steckverbindungsabschnitte 20.1, 20.2. In Figuren 4a und 4b sind sieben derartige Öffnungen 32 vorgesehen. Auf diese Weise ist es möglich, eine größere Anzahl verschiedener Förderelemente 12, 25, 24, 28, 40 an dem Förderträger 10 mittels Steckverbindung 20 anzubringen. Außerdem kann die Steckverbindung 20 zuverlässiger ausgestaltet werden, wenn sie gleichzeitig über mehrere männliche und weibliche Teile erfolgt.

Des Weiteren unterscheidet sich die Ausgestaltung des Förderträgers 10 gemäß Figuren 4a und 4b von der Ausgestaltung gemäß Figuren 3a und 3b darin, dass die beiden Enden des Förderträgers 10 verschieden ausgestaltet sind. Während ein erstes Ende des Förderträgers 10 eine horizontal fluchtend in zwei im Wesentlichen vertikal ausgerichtete Zungen eingebrachte Öffnung 36 aufweist, ist auf der gegenüberliegenden Seite am zweiten Ende des Förderträgers 10 eine vertikal fluchtend in zwei im Wesentlichen horizontal verlaufende Zungen eingebrachte Öffnung 34 vorgesehen.

Ein Verbinden von zwei benachbarten derartigen Förderträgern 10 erfordert ein weiteres Element, beispielsweise ein Kreuzungsgelenk 38, wie es in Fig. 5 illustriert ist. Durch den Einsatz eines solchen grundsätzlich bekannten Kreuzungsgelenk 38 wird ermöglicht, dass die Förderkette 100 dreidimensionalen Konturen folgen kann, das heißt nicht auf eine zweidimensionale Ebene beschränkt ist.

Figuren 6a und 6b zeigen jeweils eine bevorzugte Ausführungsform eines Förderelements 12, wobei Fig. 6a eine perspektivische Ansicht und Fig. 6b eine seitliche Schnittansicht des Förderelements 12 illustriert. Bei dem in Figuren 6a und 6b gezeigten Förderelement 12 handelt es sich um den Pinclip 12, der auch in Fig. 1a illustriert ist.

Fig. 7 zeigt den in Fig. 1b bereits illustrierten Kamm-Mitnehmer 28 als weiteres Beispiel eines Förderelements in einer perspektivischen Ansicht. Fig. 8 zeigt ein Leiterelement 40 als weiteres Beispiel eines Förderelements zur lösbaren Anbringung an einem Förderträger 10 und Fig. 9 zeigt ein weiteres Leiterelement 24 als Beispiel eines Förderelements zur lösbaren Anbringung an einem Förderträger 10. Das Leiterelement 24 aus Fig. 9 entspricht dabei dem in Figuren 1b und 2 gezeigten Leiterelement 24, während das Leiterelement 40 aus Fig. 8 ein Drei-Segment-Leiterelement ist. Beide Leierelemente 24, 40 dienen dazu, Hängeware nicht nur entlang eines Gleitprofils zu verschieben, sondern sie auch zu tragen. Aus diesem Grund ist es bei diesen Ausführungsformen des Förderelements von besonderer Bedeutung, dass die Steckverbindung 20 über ein Formschlusselement wie beispielsweise die Rastnasen 19, die mit Bezug auf Fig. 2 beschrieben wurden, aufweist. Durch ein derartiges Formschlusselement kann noch zuverlässiger verhindert werden, dass sich das Förderelement unbeabsichtigt vom Förderträger 10 löst.

Figuren 10 und 11 illustrieren zwei Teile der Klinke 25, die in Fig. 1a illustriert ist und in diesem Zusammenhang beschrieben wurde. Fig. 10 illustriert dabei den feststehenden Teil 23, während Fig. 11 den schwenkbaren Teil 22 zeigt. In Fig. 10 ist eine Öffnung 48 für einen Bolzen (nicht gezeigt) dargestellt, wobei der Bolzen durch die Öffnung 48 und die Öffnung 50 im schwenkbaren Element 22 verlaufen kann, um ein Schwenken des schwenkbaren Elements 22 um den Bolzen zu erlauben und damit die Möglichkeit für das Klinkenelement 25 zu bieten, einen Eingriff des schwenkbaren Elements 22 in die zu fördernde Hängeware wahlweise herzustellen oder zu lösen.

Grundsätzlich sind auch andere Förderelemente als die in den vorliegenden Figuren illustrierten Elemente 12, 24, 25, 28 und 40 denkbar.

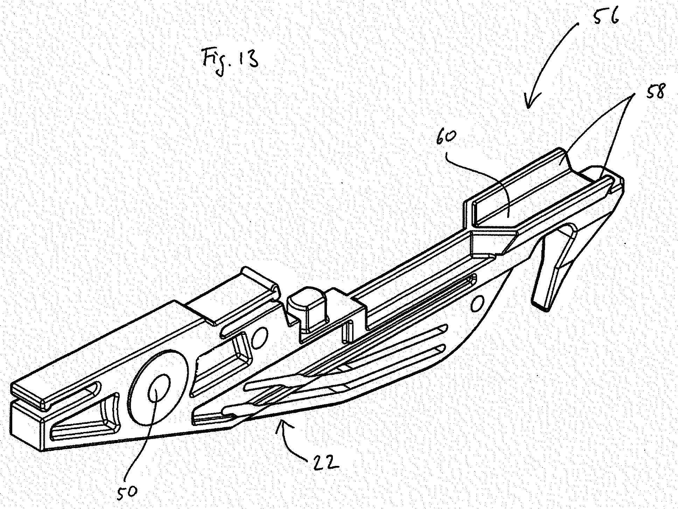

Fig. 13 ist eine Detailansicht einer bevorzugten Ausführungsform des schwenkbaren Teils 22 aus Fig. 11. Im Gegensatz zu der in Fig. 11 dargestellten Ausführungsform des schwenkbaren Teils 22 weist die bevorzugte Ausführungsform aus Fig. 13 zwei voneinander beabstandete Rippen 58 an seinem der Öffnung 50 gegenüberliegenden Ende auf. Diese Rippen 58 definieren zwischen sich eine Aufnahme 60, die zusammen mit einem an dem festen Teil 23 ausgebildeten, nicht dargestellten Vorsprung eine Stütze 56 bildet.

Wenn der schwenkbare Teil 22 nach oben geschwenkt ist, so dass er nicht in Eingriff mit der zu fördernden Hängeware ist, besteht bei der Ausführungsform aus Fig. 11, d.h. ohne die Stütze 56, die grundsätzliche Gefahr einer Fehlausrichtung des schwenkbaren Teils 22 quer zur Verlaufsrichtung der Führungsschiene 42. Wenn der schwenkbare Teil 22 dann wieder herabbewegt wird, um die zu fördernde Hängeware zu ergreifen und über die Führungsschiene 42 zu fördern, besteht dann die Gefahr, dass die Hängeware nicht korrekt und somit nicht zuverlässig ergriffen wird.

Um dies zu verhindern wird durch die Stütze 56 sichergestellt, dass der schwenkbare Teil 22 der Klinke 25 auch im hochgeschwenkten Zustand quer zur Verlaufsrichtung der Führungsschiene 42 arretiert ist, d.h. sich nicht quer zur Verlaufsrichtung der Führungsschiene 42 über ein bestimmtes Maß hinaus bewegen kann.

Selbstverständlich kann diese Stütze 56 auch umgekehrt konstruiert sein, d.h. dass der schwenkbare Teil 22 einen Vorsprung aufweist, während eine dazugehörige Aufnahme an dem festen Teil 23 ausgebildet ist. Zudem sind grundsätzlich auch weitere Ausführungsformen einer entsprechenden Stütze 56 möglich.

Fig. 12 zeigt eine Querschnittsansicht einer Förderanlage für Hängeware. Zusätzlich zu dem bereits beschriebenen Förderträger 10 und dem Förderelement 12 sowie dem Laufwagen 14 zeigt Fig. 12 auch eine Führungsschiene 42, entlang welcher der Laufwagen 14 bewegt wird, so dass der Förderträger 10 mit der Führungsschiene 42 wirkverbunden ist. Die in Fig. 12 dargestellte Ausführungsform der Förderanlage umfasst zusätzlich zu der Führungsschiene 42 ein Seitenprofil 44, über das ein Gleitprofil 46 an der Führungsschiene 42 gehalten wird. Das Gleitprofil 46 dient dazu, die Hängeware zu tragen, das heißt die Gewichtskraft der Hängeware aufzunehmen. An dem Gleitprofil 46 hängend wird die Hängeware dann von dem Förderelement 12 über das Gleitprofil 46 bewegt.

In Fig. 12 sind ferner acht Seiten illustriert. Die Seite "oben" ist mit "O" bezeichnet, "oben rechts" mit "OR", "rechts" mit "R", "unten rechts" mit "UR", "unten" mit "U", "unten links" mit "UL", "links" mit "L" und "oben links" mit "OL". In der Darstellung aus Fig. 12 nimmt jede dieser acht Seiten ein Achtel des Winkelbereichs in der Ebene senkrecht zur zentral im Förderträger 10 definierten Längsachse des Förderträgers 10 ein, also jeweils 45 Grad. Es ist jedoch auch möglich, nur vier oder sogar nur zwei verschiedene Seiten voneinander zu unterscheiden. Dann vergrößert sich der jeweilige Anteil des gesamten Winkelbereichs auf der senkrecht zur Längsachse liegenden Ebene auf ein Viertel (bei vier Seiten), also 90 Grad, bzw. eine Hälfte (bei zwei Seiten), also 180 Grad. Gemäß einem Aspekt der vorliegenden Erfindung ist der Förderträger 10 auf einer anderen dieser Seiten mit der Führung 42 wirkverbunden als derjenigen dieser Seiten, von der aus die (Steck-) Verbindung 20 zwischen dem Förderelement und dem Förderträger 10 getrennt werden kann. In den in einigen der vorliegenden Figuren dargestellten Beispielen kann die Steckverbindung 20 von "oben rechts", "rechts", "unten rechts", "unten links", "links" oder "oben links" getrennt werden, während die Wirkverbindung zwischen dem Förderträger 10 und der Führung 42 über den Laufwagen 14 "oben" angeordnet ist.

Das Seitenprofil 44 und das Gleitprofil 46 sind grundsätzlich optional. Es ist beispielsweise möglich, eine Förderanlage zu konstruieren, die nur Leiterelemente 24, 40 oder ähnliche Förderelemente nutzt. Diese Förderanlage kann grundsätzlich mit denselben Bauteilen hergestellt werden, wie eine Förderanlage, die eines der übrigen oben genannten und in den Figuren illustrierten Förderelemente 12, 25, 28 nutzt und folglich das Gleitprofil 46 benötigt.

Hierzu ist anzumerken, dass die Darstellung aus Fig. 12 eine Förderanlage illustriert, bei der die Hängeware über das Gleitprofil 46 geschoben wird. Bei einer Ausgestaltung der Förderelemente 24, 40 wie in Fig. 8 oder Fig. 9 gezeigt, wird die Hängeware nicht über ein Gleitprofil 46 geschoben, so dass sowohl das Gleitprofil 46 als auch das Seitenprofil 44 aus Fig. 12 entfallen. Das Seitenprofil 44 und das Gleitprofil 46 kann nicht nur weggelassen, sondern je nach Anwendungsfall auch unterschiedlich ausgestaltet werden. Beispielsweise kann das Gleitprofil 46 durch einzelne, voneinander längs der Führung 42 und längs des Gleitprofils 46 voneinander beabstandete Seitenprofile 44 an der Führung 42 angebracht sein.

Bei der in Fig. 12 gezeigten Ausführungsform wird das Lösen der (dort nicht gezeigten) Verbindung, die als Steckverbindung wie die Steckverbindungen 20 aus den zuvor beschriebenen Figuren ausgebildet ist, nur von der linken Seite L, je nach Ausgestaltung der Steckverbindung 20 auch von OL und UL, ermöglicht, während die rechte Seite R sowie OR und UR durch das Seitenprofil 44, die obere Seite O durch die Führungsschiene 42 und die untere Seite U durch das Förderelement 12 verdeckt sind. Bei einer alternativen Ausführungsform ohne Gleitprofil 46 und Seitenprofil 44 ist die (in Fig. 12 nicht gezeigte) Verbindung auch von der rechten Seite R, je nach Ausgestaltung der Steckverbindung 20 auch von OR und UR, lösbar.

Die Möglichkeit der modularen Konstruktion führt zu erheblicher Kostenersparnis in der Entwicklung und in der Herstellung der Förderanlagen. Je nach Bedarf kann eine bestehende Förderanlage auch leicht umgerüstet werden, indem ein vorhandenes Seitenprofil 44 und Gleitprofil 46 entfernt und die Förderelemente entsprechend ausgetauscht werden oder indem ein fehlendes Gleitprofil 46 über das Seitenprofil 44 an der Führungsschiene 42 angebracht wird. Die Förderelemente können schnell und unkompliziert ausgetauscht werden.

Durch die vorstehend beschriebene Erfindung wird es besonders leicht möglich, eine Vielzahl verschiedenster Förderanlagen aus einer kleinen Zahl von flexibel einsetzbaren Einzelteilen zu konstruieren und je nach Bedarf auch umzurüsten. Insbesondere ist es möglich, ohne die Förderkette 100 öffnen zu müssen, einzelne Förderelemente auszutauschen oder umzurüsten, was eine erhebliche Ersparnis bei der hierfür üblicherweise notwendigen Arbeitszeit bedeutet.

Insbesondere ermöglicht die vorstehend beschriebene Erfindung auch, dass Wartung oder Reparatur von Förderelementen schnell und einfach durchgeführt werden können, ohne die Förderkette 100 hierfür öffnen zu müssen, weil die Förderelemente von den Förderträgern 10 bei geschlossener Förderkette 100 gelöst werden können. Dies ergibt sich einerseits daraus, dass die Verbindung zwischen Förderelement und Förderträger von einer anderen Seite des Förderträgers aus getrennt werden kann als der Seite, an welcher der Förderträger 10 mit der Führung 42 wirkverbunden ist. Andererseits ergibt sich dieser Vorteil aus der Verwendung einer Steckverbindung, die besonders leicht und schnell gelöst werden kann.

## Patentansprüche

1. Förderkette (100) zum Fördern von Hängeware und Führung (42), wobei die Förderkette (100) umfasst:
mehrere Förderträger (10), die jeweils auf einer ersten Seite (O) der Förderträger (10) mit der Führung (42) wirkverbunden sind, und
zumindest ein Förderelement (12,24,25,28, 40), das mittels einer Steckverbindung (20) an zumindest einem der Förderträger (10) lösbar angebracht ist, um die Hängeware zu fördern,
wobei die erste Seite (O) die Oberseite des Förderträgers (10) ist und
die Steckverbindung (20) derart ausgestaltet ist, dass sie von einer zweiten Seite (L, U, R) des Förderträgers (10) aus, die von der ersten Seite (O) verschieden ist, trennbar ist,
so dass das Förderelement (12, 24, 25, 28, 40) bei geschlossener Förderkette (100) vom Förderträger (10) lösbar ist,
**dadurch gekennzeichnet, dass** jeder Förderträger (10) zumindest zwei unabhängig voneinander wirkende Steckverbindungsabschnitte (20.1, 20.2) aufweisen, die einzeln und/oder zusammen zum alternativen und/oder gleichzeitigen Anbringen zumindest zweier unterschiedlicher Förderelemente (12, 24, 25, 28, 40) nutzbar sind.

2. Förderkette (100) nach Anspruch 1,
wobei der Förderträger (10) eine Zugstange für eine Zugstangenkette (100) ist.

3. Förderkette (100) nach Anspruch 1 oder 2,
wobei die Steckverbindung (20) mit zumindest einem längs einer Einführrichtung (X) der Steckverbindung (20) wirkenden Formschlusselement (19) ausgestaltet ist,
wobei das Formschlusselement (19) insbesondere eine erste Rastnase umfasst, die elastisch in Eingriff mit einem entsprechenden Anschlag und/oder einer entsprechenden zweiten Rastnase bringbar ist.

4. Förderkette (100) nach einem der Ansprüche 1 bis 3,
wobei die Steckverbindung (20) einen männlichen Teil (17) und einen weiblichen Teil (32) umfasst und
wobei der Förderträger (10) derart ausgestaltet ist, dass er den weiblichen Teil (32) der Steckverbindung (20) aufweist und/oder
wobei das Förderelement (12, 24, 25, 28, 40) derart ausgestaltet ist, dass es den männlichen Teil (17) der Steckverbindung (20) aufweist.

5. Förderkette (100) nach einem der Ansprüche 1 bis 4,
wobei die Steckverbindung (20) kodiert ist.

6. Förderkette (100) nach einem der Ansprüche 1 bis 5,
wobei die Steckverbindung (20) eine Mehrzahl männlicher Teile (17) und eine Mehrzahl weiblicher Teile (32) umfasst, die jeweils mit ihrem entsprechenden Gegenstück zusammenwirken.

7. Förderkette (100) nach einem der Ansprüche 1 bis 6, wobei das zumindest eine Förderelement (12, 24, 25, 28, 40) in einem zusammengesetzten Zustand der Förderkette (100) von dem zumindest einen Förderträger (10) lösbar ist, ohne die Förderkette (100) zu öffnen oder einer Führung (42), insbesondere einer Führungsschiene, ganz oder bereichsweise zu entnehmen.

## Claims

1. Conveyor chain (100) for conveying suspended items, and a guide (42), the conveyor chain (100) comprising:
a plurality of conveyor supports (10), which are each operatively connected to the guide (42) on a first side (O) of the conveyor supports (10), and
at least one conveyor element (12, 24, 25, 28, 40), which is releasably attached to at least one of the conveyor supports (10) by means of an plug connection (20) in order to convey the suspended items,
the first side (O) being the upper side of the conveyor support (10) and
the plug connection (20) being designed such that it can be separated from a second side (L, U, R) of the conveyor support (10) that is different from the first side (O),
such that the conveyor element (12, 24, 25, 28, 40) can be released from the conveyor support (10) when the conveyor chain (100) is closed,
**characterised in that** each conveyor support (10) comprises at least two plug connection portions (20.1, 20.2) that act independently of one another and that can be used individually and/or together for the alternative and/or simultaneous attachment of at least two different conveyor elements (12, 24, 25, 28, 40).

2. Conveyor chain (100) according to claim 1,
wherein the conveyor support (10) is a connecting rod for a connecting rod chain (100).

3. Conveyor chain (100) according to claim 1 or 2,
wherein the plug connection (20) is designed having at least one positive-locking element (19) that acts in an insertion direction (X) of the plug connection (20),
wherein the positive-locking element (19) in particular comprises a first latching lug that can be resiliently brought into engagement with a corresponding catch and/or a corresponding second latching lug.

4. Conveyor chain (100) according to any of claims 1 to 3,
wherein the plug connection (20) comprises a male part (17) and a female part (32) and
wherein the conveyor support (10) is designed such that it comprises the female part (32) of the plug connection (20) and/or
wherein the conveyor element (12, 24, 25, 28, 40) is designed such that it comprises the male part (17) of the plug connection (20).

5. Conveyor chain (100) according to any of claims 1 to 4,
wherein the plug connection (20) is coded.

6. Conveyor chain (100) according to any of claims 1 to 5,
wherein the plug connection (20) comprises a plurality of male parts (17) and a plurality of female parts (32), which each interact with their corresponding counterpart.

7. Conveyor chain (100) according to any of claims 1 to 6,
wherein the at least one conveyor element (12, 24, 25, 28, 40) can be released from the at least one conveyor support (10) in an assembled state of the conveyor chain (100) without opening the conveyor chain (100) or removing same from a guide (42), in particular a guide rail, in full or in part.

## Revendications

1. Chaîne à raclettes (100) pour le transport d'une marchandise suspendue et guidage (42), dans laquelle la chaîne à raclettes (100) comprend :
plusieurs supports de transport (10) qui sont reliés activement respectivement sur un premier côté (O) des supports de transport (10) au guidage (42), et
au moins un élément de transport (12, 24, 25, 28, 40) qui est monté de manière amovible au moyen d'une liaison d'enfichage (20) au niveau d'au moins un des supports de transport (10) afin de transporter la marchandise suspendue,
dans laquelle le premier côté (O) est le côté supérieur du support de transport (10) et
la liaison d'enfichage (20) est configurée de telle manière qu'elle puisse être séparée d'un second côté (L, U, R) du support de transport (10) qui est différent du premier côté (O),
de sorte que l'élément de transport (12, 24, 25, 28, 40) puisse être détaché en cas de chaîne à raclettes fermée (100) du support de transport (10),
**caractérisée en ce que**
chaque support de transport (10) présente au moins deux sections de liaison d'enfichage (20.1, 20.2) agissant indépendamment l'une de l'autre qui sont utilisables individuellement et/ou ensemble pour le montage alternatif et/ou simultané au moins de deux éléments de transport différents (12, 24, 25, 28, 40).

2. Chaîne à raclettes (100) selon la revendication 1,
dans laquelle le support de transport (10) est une tige de traction pour une chaîne de tiges de traction (100).

3. Chaîne à raclettes (100) selon la revendication 1 ou 2,
dans laquelle la liaison d'enfichage (20) est configurée avec au moins un élément à complémentarité de formes (19) agissant le long d'un sens d'introduction (X) de la liaison d'enfichage (20),
dans laquelle l'élément à complémentarité de formes (19) comprend en particulier un premier nez d'encliquetage qui peut être amené élastiquement en prise avec une butée correspondante et/ou un second nez d'encliquetage correspondant.

4. Chaîne à raclettes (100) selon l'une des revendications 1 à 3,
dans laquelle la liaison d'enfichage (20) comprend une partie mâle (17) et une partie femelle (32) et
dans laquelle le support de transport (10) est configuré de telle manière qu'il présente la partie femelle (32) de la liaison d'enfichage (20) et/ou
dans laquelle l'élément de transport (12, 24, 25, 28, 40) est configuré de telle manière qu'il présente la partie mâle (17) de la liaison d'enfichage (20).

5. Chaîne à raclettes (100) selon l'une des revendications 1 à 4,
dans laquelle la liaison d'enfichage (20) est codée.

6. Chaîne à raclettes (100) selon l'une des revendications 1 à 5,
dans laquelle la liaison d'enfichage (20) comprend une pluralité de parties mâles (17) et une pluralité de parties femelles (32) qui coagissent respectivement avec leur pièce antagoniste correspondante.

7. Chaîne à raclettes (100) selon l'une des revendications 1 à 6,
dans laquelle l'au moins un élément de transport (12, 24, 25, 28, 40) est détachable dans un état composé de la chaîne à raclettes (100) de l'au moins un support de transport (10) sans ouvrir la chaîne à raclettes (100) ou retirer entièrement ou par endroits d'un guidage (42), en particulier d'un rail de guidage.
